# EUROPEAN PATENT SPECIFICATION

(11) **EP 2 348 675 B1**
(45) Date of publication and mention of the grant of the patent: **27.03.2013**
(21) Application number: 11150918.8
(22) Date of filing: 14.01.2011
(51) Int. Cl.: H04L 12/28, H04L 1/18, H04L 12/825, H04L 12/857

(54) **Network system, network interconnection device and data transmission method**
Netzwerksystem, Netzwerkverbindungsvorrichtung und Datenübertragungsverfahren
Système de réseau, dispositif d'interconnexion de réseau et procédé de transmission de données

(30) Priority: 26.01.2010 JP 2010014003
(43) Date of publication of application: 27.07.2011
(73) Proprietor: Hitachi Ltd., Tokyo 100-8280 (JP)
(72) Inventor: Yunoki, Shoji, Tokyo 100-8220 (JP); Takada, May, Tokyo 100-8220 (JP); Odaka, Toshiyuki, Tokyo 100-8220 (JP); Miyazaki, Masayuki, Tokyo 100-8220 (JP); Yamada, Tsutomu, Tokyo 100-8220 (JP)
(74) Representative: MERH-IP Matias Erny Reichl Hoffmann

(56) References cited:
- US-A1- 2005 265 282
- US-A1- 2006 251 086

## Description

### FIELD OF THE INVENTION

The present invention relates to a communication terminal and a network interconnection apparatus that respectively apply QoS control to data communication made via plural communication networks.

### BACKGROUND OF THE INVENTION

Recently, cases that the monitoring and the maintenance of facilities, the monitoring of energy consumption and others in a power plant or an industrial plant are automatically executed by remote control by using a sensor network increase. Heretofore, a management system for analyzing data collected by the sensor network was mostly arranged on a local area network to which a monitoring object of the sensor network was connected, however, recently, as the number of communication terminals which are included in a sensor network and collect data from monitoring objects increases and the quantity of information collected by each communication terminal increases, a case that the information cannot be accommodated on one local area network and is accommodated with the information divided into plural local area networks has increased. Besides, a demand that plural different monitoring objects should be integrally managed by one management system also increases.

Therefore, configuration that information collected on plural local area networks is integrated in one management system via a wide area network has been popularized. In the wide area network, a sufficient communication band may be secured using dedicated lines, however, in future, it is estimated that a case that common communication resources are shared with another system or another terminal via an intranet or the Internet in consideration of communication costs increases. When such a case increases, it is considered that a case that a sufficient communication band cannot be secured increases.

A method of controlling the communication quality of such communication via two networks of a local area network and a wide area network is known (for example, refer to JP-A-2000-341343 or to US 2006/251086 A1) . In the method disclosed in JP-A-2000-341343, when a communication terminal in a local area network (LAN) makes communication via an asynchronous transfer mode (ATM) network, a network interconnection apparatus that connects LAN and the ATM network (equivalent to the wide area network) collects the statistical information of communication in LAN and sets a band and burst size which the ATM network should guarantee based upon the collected statistical information. When the ATM network cannot guarantee the band set by the network interconnection apparatus, the network interconnection apparatus lowers a communication quality level to be guaranteed so that the ATM network can guarantee.

### SUMMARY OF THE INVENTION

When a communication terminal in a local area network transmits data to a management system via a network interconnection apparatus that connects the local area network and a wide area network, an amount of data generated per unit time transmittable from the network interconnection apparatus to the wide area network may be smaller than an amount of data generated per unit time which the communication terminal in the local area network transmits to the network interconnection apparatus. In this case, the overflow of a buffer in the network interconnection apparatus is caused.

A case that the overflow of the buffer in the network interconnection apparatus is caused and data the priority of which is high such as an alarm showing abnormality in a plant is included in data that overflows from the buffer occurs. Besides, in communication quality control disclosed in JP-A-2000-341343, the priority of data is not considered. Therefore, in the communication quality control disclosed in JP-A-2000-341343, when the communication quality level to be guaranteed is lowered as described above, a communication terminal in a local area network cannot sometimes transmit data the priority of which is high to a management center correctly.

In a sensor network, a battery-powered communication terminal that does not perform intricate processing and performs only the sensing and the transmission of data is often used and such a communication terminal consumes most of power by transmitting data. Therefore, in the communication terminal, power required for the transmission of data is required to be reduced.

An object of the invention is to provide a system for reducing the consumption of power in a communication terminal and for preventing the loss of data the priority of which is high caused due to the overflow of a buffer in a network interconnection apparatus.

The invention is defined by the subject-matter of independent claims 1, 8 and 13.

According to one embodiment of the invention, the loss of data of high priority due to the overflow of a buffer in the network interconnection apparatus can be prevented.

### BRIEF DESCRIPTION OF THE DRAWINGS

Fig. 1 is a schematic diagram showing the whole configuration of a communication system disclosed in a first embodiment of the invention;
Fig. 2 is a block diagram showing a communication terminal in the first embodiment of the invention;
Fig. 3 is a block diagram showing a network interconnection apparatus disclosed in the first embodiment of the invention;
Fig. 4A is a diagram showing a LAN QoS table in the first embodiment of the invention;
Fig. 4B is a diagram showing a WAN QoS table in the first embodiment of the invention;
Fig. 4C is a diagram showing a table index information in the first embodiment of the invention;
Fig. 5 is a diagram showing a data rate every priority generated in the whole local area network in the first embodiment of the invention;
Fig. 6A is a diagram showing a comparative example for comparing with the embodiment of the invention;
Fig. 6B is a diagram showing the comparative example for comparing with the embodiment of the invention;
Fig. 6C is a diagram showing communication to a wide area network in the first embodiment of the invention;
Fig. 6D is a diagram showing communication to the wide area network in the first embodiment of the invention;
Fig. 7 is a flowchart showing a process of the network interconnection apparatus disclosed in the first embodiment of the invention;
Fig. 8 is a flowchart showing a process of the communication terminal in the first embodiment of the invention;
Fig. 9 is a block diagram showing a communication terminal in a second embodiment of the invention; and
Fig. 10 is a block diagram showing a network interconnection apparatus disclosed in the second embodiment of the invention.

### DETAILED DESCRIPTION OF THE PREFERRED EMBODIMENTS

A method of preventing the loss of important data due to the overflow of data from a buffer in a network interconnection apparatus includes a method in which the network interconnection apparatus adjusts a transmit data rate and a method in which a communication terminal in a local area network adjusts a transmit data rate.

In the method in which the network interconnection apparatus adjusts the transmit data rate, the communication terminal in the local area network adds a header showing criticality to data and transmits the data with the header. When data overflows from the buffer in the network interconnection apparatus, the network interconnection apparatus prevents the loss of data having high priority by sequentially abandoning from data having low priority. In the meantime, when the communication terminal adjusts the transmit data rate, the overflow of data from the buffer can be prevented in the network interconnection apparatus without adding a header showing priority to data.

In an embodiment of the invention, the latter method in which the communication terminal in the local area network adjusts the transmit data rate is used.

Referring to the drawings, the first embodiment of the invention will be described below.

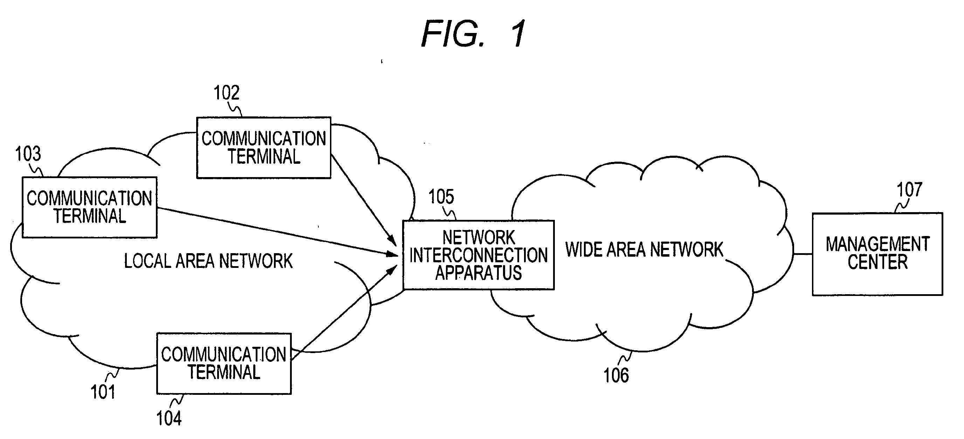

Fig. 1 is a schematic diagram showing the whole configuration of a communication system disclosed in the first embodiment of the invention.

A local area network 101 shown in Fig. 1 includes plural communication terminals 102, 103, 104 and a network interconnection apparatus 105 and is a network for collecting data to be monitored in a plant and others. The communication terminals 102, 103, 104 will be generically described as a communication terminal 201 below.

A wide area network 106 is a network shared by plural users and is a network to which a network interconnection apparatus 105 and a management center 107 that collects and analyzes data collected in the local area network are connected.

For an example of the wide area network, a public network such as a mobile phone network and a data communication network operated by ISP and a private network such as an intranet can be given. For an example of the local area network, a wire network based upon specifications of IEEE 802.3 and a radio network based upon specifications of IEEE 802.11 can be given.

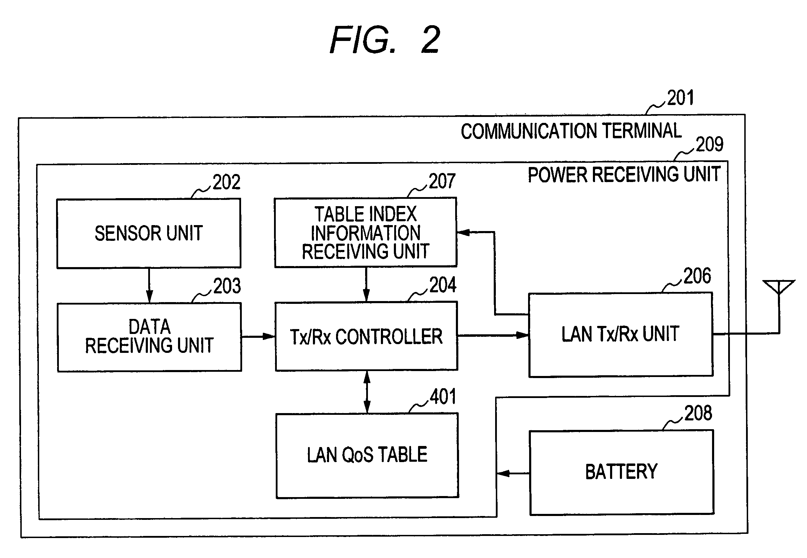

Fig. 2 is a block diagram showing the communication terminal 201 in the first embodiment of the invention.

The communication terminal 201 includes a sensor unit 202, a data receiving unit 203, a transmitter/receiver (Tx/Rx) controller 204, a LAN QoS table 401, a local area network (LAN) transmitter/receiver (Tx/Rx) unit 206, a table index information receiving unit 207, a battery 208 and a power receiving unit 209. The data receiving unit 203 includes a buffer.

The communication terminal 201 is a computer including CPU and a memory. The sensor unit 202, the data receiving unit 203, the Tx/Rx controller 204, the LAN Tx/Rx unit 206 and the table index information receiving unit 207 may be also operated by making CPU refer to a program equivalent to each unit and may be also operated by providing dedicated CPU and a dedicated memory to each unit.

The battery 208 supplies power to the power receiving unit 209 related to all elements except the battery 208 in the communication terminal 201. The power receiving unit 209 supplies power to the sensor unit 202, the data receiving unit 203, the Tx/Rx controller 204, the local area network (LAN) QoS table 401, the LAN Tx/Rx unit 206 and the table index information receiving unit 207.

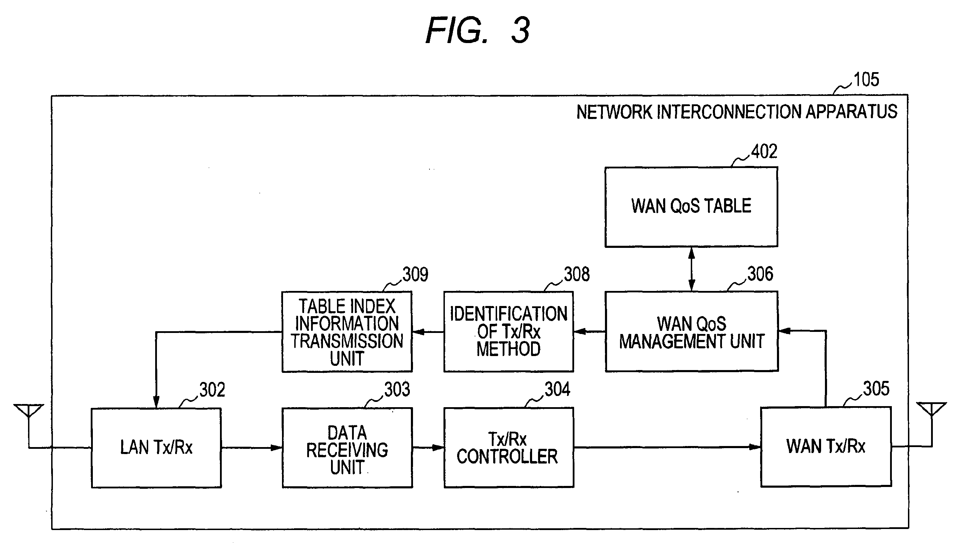

Fig. 3 is a block diagram showing the network interconnection apparatus 105 disclosed in the first embodiment of the invention.

The network interconnection apparatus 105 includes a LAN Tx/Rx unit 302, a data receiving unit 303, a Tx/Rx controller 304, a WAN Tx/Rx unit 305, a wide area network (WAN) communication quality (QoS) management unit 306, a wide area network (WAN) communication quality (QoS) table 402, a Tx/Rx method identification unit 308 and a table index information transmission unit 309. The data receiving unit 303 includes a buffer.

The network interconnection apparatus 105 is a computer including CPU and a memory. The LAN Tx/Rx unit 302, the data receiving unit 303, the Tx/Rx controller 304, the WAN Tx/Rx unit 305, the WAN QoS management unit 306, the Tx/Rx method identification unit 308 and the table index information transmission unit 309 may be also operated by making CPU refer to a program equivalent to each unit and may be also operated by providing dedicated CPU and a dedicated memory to each unit.

A type of the LAN Tx/Rx unit 206 and the LAN Tx/Rx unit 302 in embodiments of the invention is not limited, they may also enable radiocommunication or they may also enable communication by wire. In the following embodiment, the LAN Tx/Rx unit 206 and the LAN Tx/Rx unit 302 enable radiocommunication. Therefore, the LAN Tx/Rx unit 206 in this embodiment modulates and encodes data to be transmitted and the LAN Tx/Rx unit 302 demodulates and decodes received data.

The communication terminal 201 in the embodiments of the invention controls the priority of data transmission using a method specified by the network interconnection apparatus 105. The method will be described below.

First, data acquired by the sensor unit 202 provided to the communication terminal 201 is collected by the data receiving unit 203 and is input to the Tx/Rx controller 204 from the data receiving unit 203. The Tx/Rx controller 204 refers to the LAN QoS table 401 based upon output data when the data is output from the data receiving unit 203. "High", "medium" and "low" showing priority are allocated to each data beforehand.

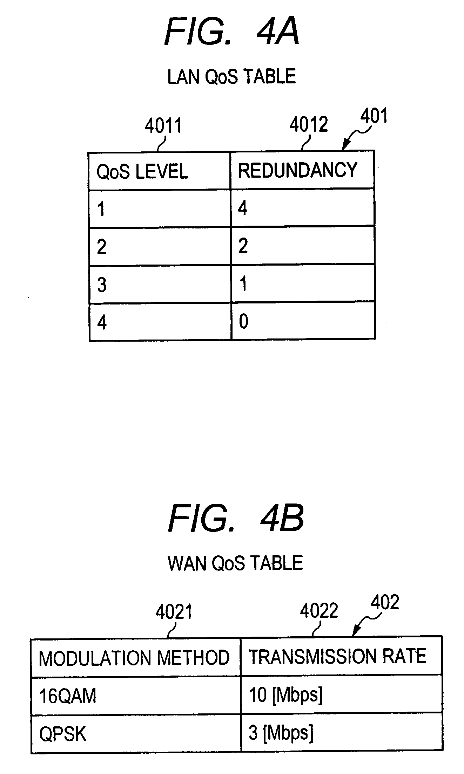

Fig. 4A is a diagram showing the LAN QoS table 401 in the first embodiment of the invention.

The LAN QoS table 401 shows the combination of a QoS level 4011 and redundancy 4012. The LAN QoS table 401 shown in Fig. 4A includes only the combinations of two items of the QoS level 4011 and the redundancy 4012; however, the combinations of three or more items may be also included.

Each QoS level 4011 corresponding to each priority is allocated to data and a value of the redundancy 4012 shown in the LAN QoS table 401 is acquired based upon the allocated QoS level 4011. Data is transmitted by the acquired value (frequency) of the redundancy. When the value of the redundancy 4012 is 0' , no data is transmitted. The Tx/Rx controller 204 transmits data by the frequency shown in a field of the redundancy 4012 in the LAN QoS table 401 via the LAN Tx/Rx unit 206.

The network interconnection apparatus 105 receives data via the LAN Tx/Rx unit 302 and stores the received data in the buffer of the data receiving unit 303. The data stored in the buffer is transmitted to the wide area network 106 via the Tx/Rx controller 304 and the wide area network (WAN) transmitter/receiver (Tx/Rx) unit 305. The Tx/Rx controller 304 controls the send sequence of data and others to transmit the data stored in the buffer to the wide area network 106; however, in this embodiment of the invention, data is transmitted in the order of arrival.

The network interconnection apparatus 105 in this embodiment of the invention periodically acquires the communication quality of the wide area network 106 via the WAN Tx/Rx unit 305 and instructs the communication terminal 201 to modify the LAN QoS table 401 included in the communication terminal 201 according to the communication quality of the wide area network 106.

The WAN QoS management unit 306 acquires information showing the current communication quality of the wide area network 106 from the WAN Tx/Rx unit 305. The WAN QoS management unit 306 refers to the WAN QoS table 402 based upon the acquired information showing communication quality and acquires transmission rate transmittable to the current wide area network 106. The WAN QoS management unit inputs the acquired transmission rate to the Tx/Rx method identification unit 308.

The WAN QoS management unit 306 stores the information of communication quality acquired from the WAN Tx/Rx unit 305 in its memory.

Fig. 4B is a diagram showing the WAN QoS table 402 in the first embodiment of the invention.

In this embodiment, the acquired communication quality is determined depending upon a modulation method. The WAN QoS table 402 shown in Fig. 4B shows the combination of a modulation method 4021 and transmission rate 4022 as an index of the modulation method 4021. The transmission rate 4022 corresponding to the modulation method 4021 is allocated beforehand.

In this embodiment, communication quality is determined depending upon the modulation method, however, when TCP/IP is used in the wide area network 106, communication quality may be also determined depending upon window size and others. Besides, in this embodiment, the transmission rate 4022 is used for an index of the communication quality of the wide area network 106, however, delay time or packet loss probability may be also used for the index. Further, in the WAN QoS table 402 in this embodiment, only two modulation methods are included; however, three or more modulation methods may be also included.

In this case, a case that a modulation method output from the WAN Tx/Rx unit 305 of the wide area network 106 is 16QAM will be described below. The WAN QoS management unit 306 refers to the WAN QoS table 402 based upon information that the modulation method is 16QAM and acquires information that transmission rate transmittable to the wide area network 106 is 10 Mbps. The WAN QoS management unit 306 inputs the acquired transmission rate 4022 to the Tx/Rx method identification unit 308.

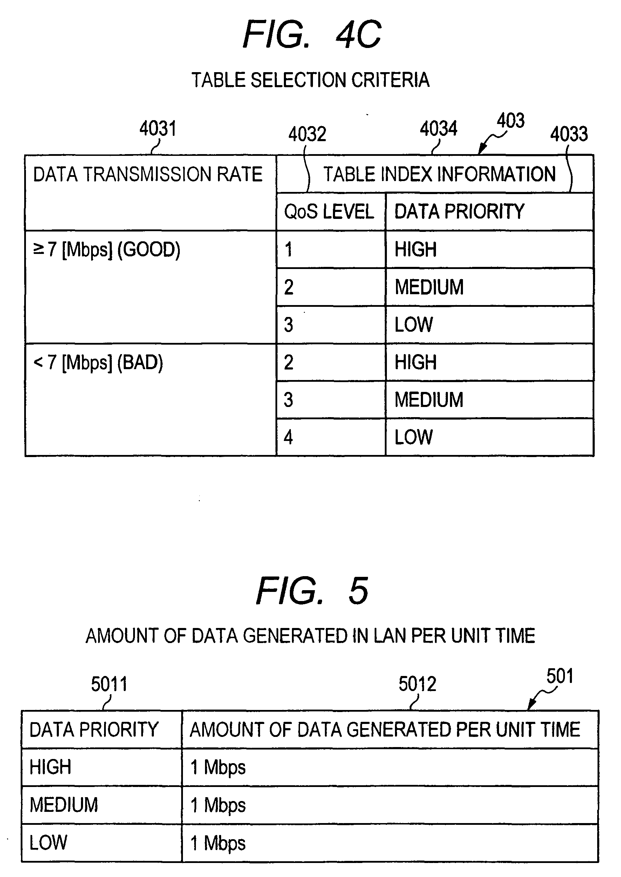

The Tx/Rx method identification unit 308 refers to a table index information 403 shown in Fig. 4C and included in the Tx/Rx method identification unit 308.

Fig. 4C is a diagram showing the table index information 403 in the first embodiment of the invention.

The table index information 403 shows the data transmission rate 4031 of the transmission rate of the wide area network 106 and a QoS level 4032 which the communication terminal 201 allocates to data according to the priority 4033. Table selection criteria 4034 shows the combination of the QoS level 4032 and the priority 4033. A threshold of the condition 4031 of transmission rate shown in Fig. 4C is 7 Mbps as transmission rate. Besides, the QoS level 4032 shown in Fig. 4C is equivalent to the QoS level 4011 shown in Fig. 4A.

When the modulation method 4021 input from the WAN QoS management unit 306 is 16QAM and the transmission rate 4022 is 10 Mbps, the condition 4031 of transmission rate is equivalent to 7 or more Mbps. Therefore, the Tx/Rx method identification unit 308 acquires table selection criteria 4034 when the condition 4031 of transmission rate in the table index information 403 is 7 or more Mbps.

Concretely, the Tx/Rx method identification unit 308 acquires the table selection criteria 4034 showing that each '1', 2' , '3' in a field of the QoS level 4032 is respectively allocated to each data the priority 4033 of which is "high", "medium", "low". Hereby, the Tx/Rx method identification unit 308 can acquire the table selection criteria 4034 specifying that each '1', 2' ,'3' in a field of the QoS level 4011 shown in the LAN QoS table 401 is respectively allocated to each data the priority of which is "high", "medium", "low" in the communication terminal 201.

Only two conditions of transmission rate are included in the table index information 403 in this embodiment, however, three or more conditions of transmission rate may be also included.

The Tx/Rx method identification unit 308 inputs the acquired table selection criteria 4034 to the table index information transmission unit 309. When the table index information transmission unit 309 receives the table selection criteria 4034, it transmits the table selection criteria 4034 to the communication terminal 201 via the LAN Tx/Rx unit 302.

The communication terminal 201 acquires the table selection criteria 4034 via the LAN Tx/Rx unit 206 and the table index information receiving unit 207. The table index information receiving unit 207 inputs the received table selection criteria 4034 to the Tx/Rx controller 204. The Tx/Rx controller 204 respectively allocates each redundancy 4012 corresponding to '1' , '2', '3' in the QoS level 4011 in the LAN QoS table 401 shown in Fig. 4A to each data the priority of which is "high", "medium", "low" in the table selection criteria 4034 and stores that the data is to be transmitted.

Afterward, when the sensor unit 202 of the communication terminal 201 receives the data and transmits the received data to the Tx/Rx controller 204 via the data receiving unit 203, a value in the QoS level 4011 is allocated according to the priority of data based upon correspondence stored in the Tx/Rx controller 204. For example, in the above-mentioned example, when the priority of data is "high", '1' in the QoS level 4011 is allocated to the data. When the priority of data is "low", '3' in the QoS level 4011 is allocated to the data.

The Tx/Rx controller 204 acquires corresponding '4' in the redundancy 4012 based upon the LAN QoS table 401 because a value in the QoS level 4011 for data the priority of which is "high" is '1'.

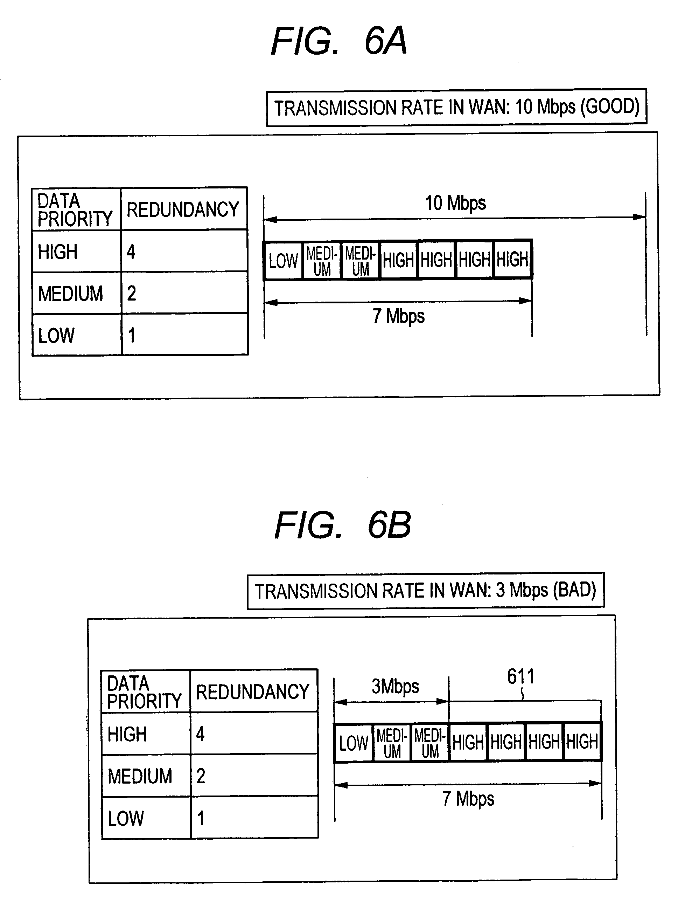

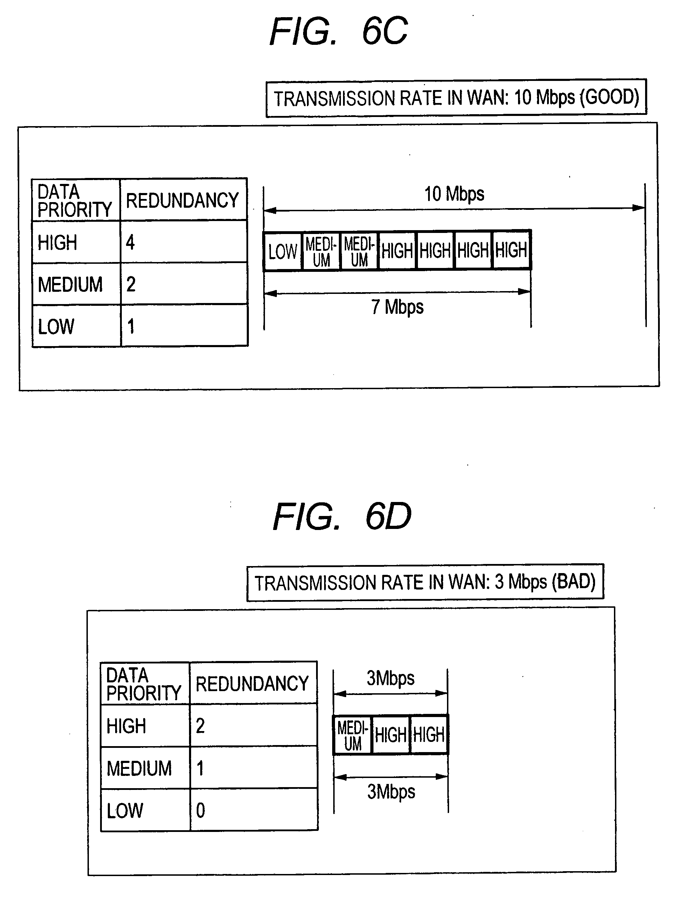

Referring to Figs. 5 and 6, setting used in the first embodiment and a result caused by the used setting will be described below.

Fig. 5 is a diagram showing a data rate every priority generated in the whole local area network 101 in the first embodiment of the invention.

In the first embodiment, as the sensor unit 202 of the communication terminal 201 periodically acquires fixed data in size such as temperature data or vibration data, a data rate acquired per unit time by each communication terminal 201 via each sensor unit 202 shall be fixed. A case that a data rate is not fixed will be described in a second embodiment.

As shown in a table 501 shown in Fig. 5, the priority 5011 of data generated in the local area network 101 is shown at three stages of "high", "medium" and "low" and data of each priority 5011 shall be generated by 1 Mbps per unit time in the whole local area network 101.

Figs. 6A and 6B are diagrams showing a comparative example for comparing with the embodiment of the invention.

Figs. 6C and 6D are diagrams showing communication with the wide area network 106 in the first embodiment of the invention.

First, the diagrams shown in Figs. 6A and 6B show a case that each data the priority of which is "high", "medium", "low" is transmitted according to the redundancy 4012 of '1', '2', '3' shown in the field of the QoS level 4011 in Fig. 4A at all times without considering the transmission rate of the wide area network 106.

In this case, a total amount of data generated per unit time transmitted from the communication terminal 201 to the network interconnection apparatus 105 is 7 Mbps acquired by calculating an expression, "1 x 4 (priority: high) + 1 x 2 (priority: medium) + 1 x 1 (priority: low)".

As the data of 7 Mbps transmitted to the network interconnection apparatus 105 is less than 10 Mbps as shown in Fig. 6A when the communication quality of the wide area network 106 is satisfactory and transmittable transmission rate is 10 Mbps, no overflow of the buffer is caused in the network interconnection apparatus 105.

However, as the data of 7 Mbps transmitted to the network interconnection apparatus 105 exceeds 3 Mbps which is the transmission rate of the wide area network 106 as shown in data 611 in Fig. 6B when the communication quality of the wide area network 106 is poor and transmittable transmission rate is 3 Mbps, the overflow of the buffer is caused in the network interconnection apparatus 105. As data that overflows is selected not depending upon priority but at random, data the priority of which is high shown in the data 611 may be lost in the worst case.

Next, the diagrams shown in Figs. 6C and 6D show a case that the embodiment of the invention is applied and redundancy with which the communication terminal 201 in the local area network 101 transmits data is varied according to the transmission rate of the wide area network 106.

First, the WAN QoS management unit 306 provided to the network interconnection apparatus 105 acquires information showing communication quality from the WAN Tx/Rx unit 305. For example, when the WAN QoS management unit 306 receives information that a modulating method in the wide area network 106 is 16QAM, it refers to the WAN QoS table 402, acquires transmission rate, 10 Mbps transmittable to the wide area network 106, and inputs it to the Tx/Rx method identification unit 308.

The Tx/Rx method identification unit 308 refers to the table index information 403. The table index information 403 shows the combination of the condition 4031 of transmission rate transmittable to the wide area network 106, that is, a condition of communication quality and the QoS level 4032 which the communication terminal 201 is to allocate to data of each priority 4033 in a case corresponding to the condition 4031.

As a state in which transmission rate is 10 Mbps is equivalent to a condition 4031 that transmission rate is 7 or more Mbps when the transmission rate acquired from the WAN QoS management unit 306 is 10 Mbps, the Tx/Rx method identification unit 308 acquires the table selection criteria 4034 in which each '1', '2', '3' in the field of the QoS level 4032 is respectively specified for each data the priority 4033 of which is "high", "medium", "low" and outputs the acquired table selection criteria 4034 to the table index information transmission unit 309. The table selection criteria 4034 is transmitted to the communication terminal 201 by the table index information transmission unit 309 via the LAN Tx/Rx unit 302.

The communication terminal 201 allocates each '1', '2', '3' in the field of the QoS level 4011 to each data the priority 4033 of which is "high", "medium", "low" when it receives the table selection criteria 4034 and transmits the data according to redundancy 4012 in accordance with the QoS level. Hereby, a total amount of data generated per unit time transmitted from all the communication terminals 201 in the local area network 101 to the network interconnection apparatus 105 is 7 Mbps acquired by calculating the expression, "1 x 4 + 1 x 2 + 1 x 1" and as it does not exceed 10 Mbps which is the transmission rate of the wide area network 106, no overflow of the buffer is caused.

Next, a case in which the WAN QoS management unit 306 receives information that the modulating method in the wide area network 106 is QPSK will be described.

In this case, the WAN QoS management unit 306 acquires that transmission rate transmittable to the wide area network 106 is 3 Mbps from the WAN QoS table 402. The Tx/Rx method identification unit 308 acquires the table selection criteria 4034 showing that each '2', '3', '4' in the field of the QoS level 4011 is allocated to each data the priority 4033 of which is "high", "medium", "low" from the table index information 403 and outputs the acquired table selection criteria 4034 to the table index information transmission unit 309. The table index information transmission unit 309 transmits the table selection criteria 4034 to the communication terminal 201 via the LAN Tx/Rx unit 302.

The communication terminal 201 allocates each '2', '3', '4' in the field of the QoS level 4011 to each data the priority 4033 of which is "high", "medium", "low" when it receives the table selection criteria 4034 and transmits the data according to redundancy 4012 according to the QoS level.

Hereby, an amount of data generated per unit time received by the network interconnection apparatus 105 is 3 Mbps acquired by calculating an expression, "1 x 2 + 1 x 1" . Even if the communication quality of the wide area network 106 is poor and the transmission rate is 3 Mbps, no overflow of the buffer is caused. Besides, as the redundancy 4012 is determined according to the priority 4033 of data, data having high priority 4033 is prevented from being annulled.

The above-mentioned process of the network interconnection apparatus 105 will be described according to a flowchart below.

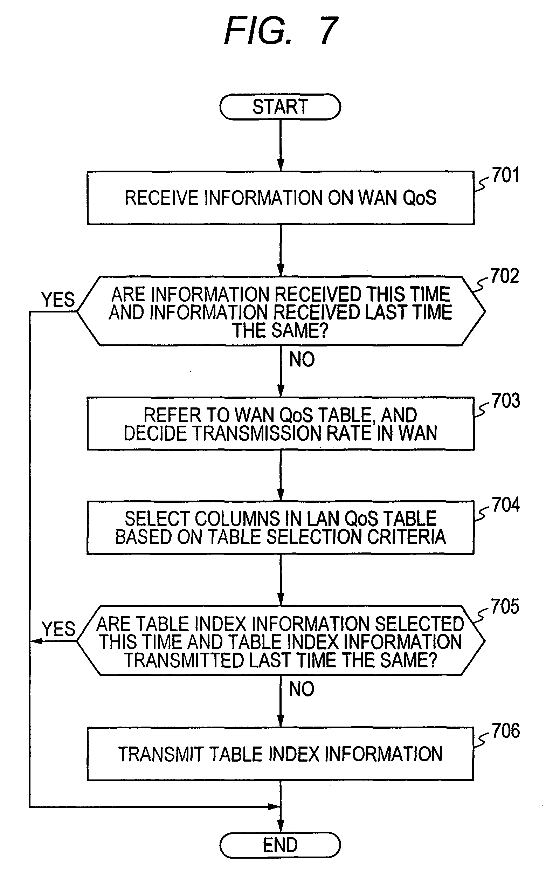

Fig. 7 is the flowchart showing the process of the network interconnection apparatus 105 in the first embodiment of the invention.

The WAN QoS management unit 306 of the network interconnection apparatus 105 periodically acquires information showing the communication quality of the wide area network 106 from the wide area network communicating unit 305 (a step 701).

The WAN QoS management unit 306 compares the information acquired this time showing the communication quality of the wide area network 106 and information acquired last time showing the communication quality of the wide area network 106 and determines whether the two informations are the same or not (a step 702). The information acquired this time means information periodically acquired by the WAN QoS management unit 306 via the WAN Tx/Rx unit 305. Besides, the information acquired last time means information acquired before the acquisition this time.

When it is determined in the step 702 that the information acquired this time showing the communication quality of the wide area network 106 is the same as the information acquired last time, the network interconnection apparatus 105 terminates the process shown in Fig. 7 because instruction to the communication terminal 201 is not required.

When it is determined in the step 702 that the information acquired this time showing the communication quality of the wide area network 106 is different from the information acquired last time, the WAN QoS management unit 306 refers to the WAN QoS table 402, acquires the index (equivalent to the transmission rate 4022 shown in Fig. 4B) of communication quality, and inputs the index of communication quality to the Tx/Rx method identification unit 308 (a step 703).

The Tx/Rx method identification unit 308 acquires table selection criteria 4034 according to the index of the wide area network 106 using the table index information 403 included in the Tx/Rx method identification unit 308 (a step 704).

The Tx/Rx method identification unit 308 compares the table selection criteria 4034 acquired this time and table selection criteria 4034 acquired last time and determines whether the two informations are the same or not (a step 705).

When it is determined in the step 705 that the table selection criteria 4034 acquired this time and the table selection criteria 4034 acquired last time are the same, the network interconnection apparatus 105 terminates the process shown in Fig. 7 because instruction to the communication terminal 201 is not required.

When it is determined in the step 705 that the table selection criteria 4034 acquired this time and the table selection criteria 4034 acquired last time are different, the Tx/Rx method identification unit 308 transmits the table selection criteria 4034 acquired this time to the communication terminal 201 via the table index information transmission unit 309 and the LAN Tx/Rx unit 302 so as to instruct the communication terminal 201 to vary redundancy 4012 (a step 706).

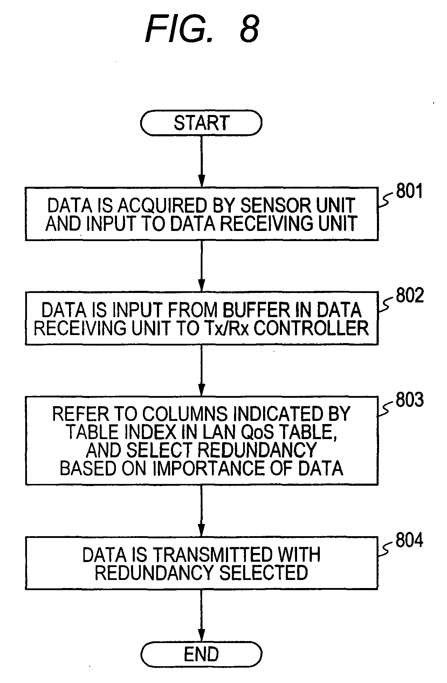

Fig. 8 is a flowchart showing the process of the communication terminal 201 in the first embodiment of the invention.

The sensor unit 202 of the communication terminal 201 inputs the acquired data to the data receiving unit 203 (a step 801). The data receiving unit 203 inputs the data input from the sensor unit 202 to the Tx/Rx controller 204 (a step 802).

The Tx/Rx controller 204 refers to a field which table index information 4032 specifies of the LAN QoS table 401 and selects redundancy 4012 according to the priority of data (a step 803).

The LAN Tx/Rx unit 206 transmits the data to the network interconnection apparatus 105 by a frequency in the selected redundancy 4012 (a step 804).

The network interconnection apparatus 105 according to the invention periodically acquires information related to communication quality such as the transmission rate of the wide area network 106. The network interconnection apparatus 105 instructs the communication terminal 201 in the local area network 101 to vary a method of transmitting data of each priority according to the acquired communication quality of the wide area network 106.

When the communication quality acquired by the network interconnection apparatus 105 of the wide area network 106 is satisfactory, the network interconnection apparatus 105 instructs the communication terminal 201 to transmit data of high priority by plural times and to also transmit data of low priority. When the communication quality of the wide area network 106 is poor, the network interconnection apparatus 105 instructs the communication terminal 201 to put off the transmission of data of low priority so as to prevent data of high priority from being lost due to the overflow of the buffer of the network interconnection apparatus 105.

As the communication terminal 201 according to the invention adjusts a transmit data rate so as not to exceed transmission rate at which the network interconnection apparatus 105 can transmit to the wide area network 106, no overflow of the buffer in the network interconnection apparatus 105 is caused.

Therefore, according to the invention, the communication terminal 201 consumes no power in transmitting data lost due to the overflow of the buffer in the network interconnection apparatus 105. Particularly, as the battery-powered communication terminal 201 is required to minimize a data transmission frequency, the invention functions as a more effective measure.

According to the invention, even if the transmission rate of the wide area network 106 is smaller, compared with an amount of data generated per unit time that reaches the network interconnection apparatus 105, the overflow of the buffer in the network interconnection apparatus 105 is avoided and data of high priority is transmitted to the management center 107 at a higher probability, compared with another data. Besides, according to the invention, the communication terminal 201 can be prevented from consuming power in transmitting data lost due to the overflow of the buffer in the network interconnection apparatus 105.

In the first embodiment of the invention, the QoS level is included in both the LAN QoS table 401 and the table index information 403, and the priority and the redundancy of data are correlated by the QoS levels. Therefore, when the combination of the priority and the redundancy of data is varied, a manager has only to vary either of the table index information 403 held in the network interconnection apparatus 105 or the LAN QoS table 401 held in the communication terminal 201 and is not required to vary all tables.

A second embodiment according to the invention will be described below.

In the first embodiment, a data rate which each communication terminal 201 acquires from the sensor unit 202 per unit time is fixed; however, in the second embodiment, a data rate varies from moment to moment. The configuration described later in the second embodiment is different from that in the first embodiment and the other configuration is the same as the other configuration in the first embodiment.

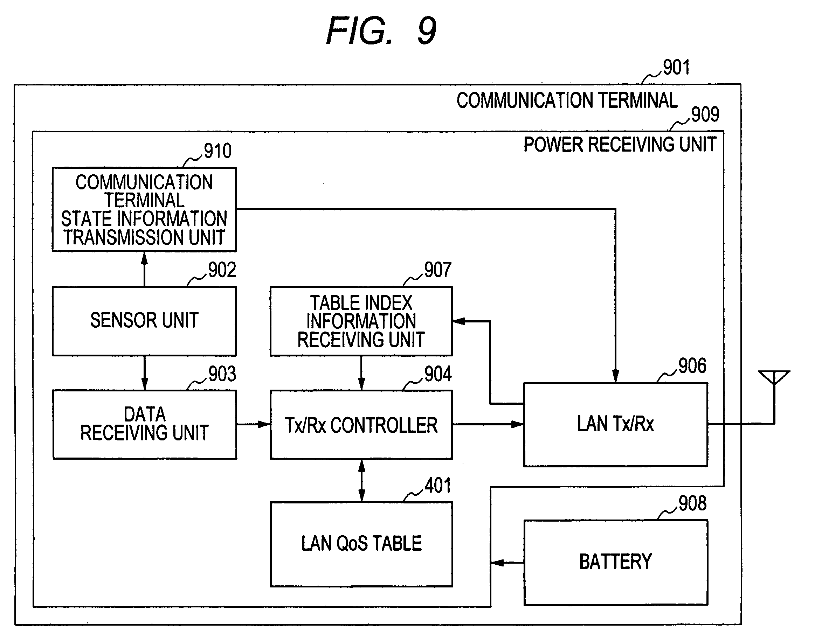

Fig. 9 is a block diagram showing a communication terminal 901 in the second embodiment of the invention.

The communication terminal 901 includes a communication terminal state information transmission unit 910 in addition to the configuration with which the communication terminal 201 in the first embodiment is provided. The communication terminal state information transmission unit 910 periodically acquires information showing a state of the communication terminal 901 and transmits the information to a network interconnection apparatus 1001 via a LAN Tx/Rx unit 906. The information showing the state of the communication terminal 901 shows an amount of data generated per unit time acquired in a sensor unit 902 every priority of data.

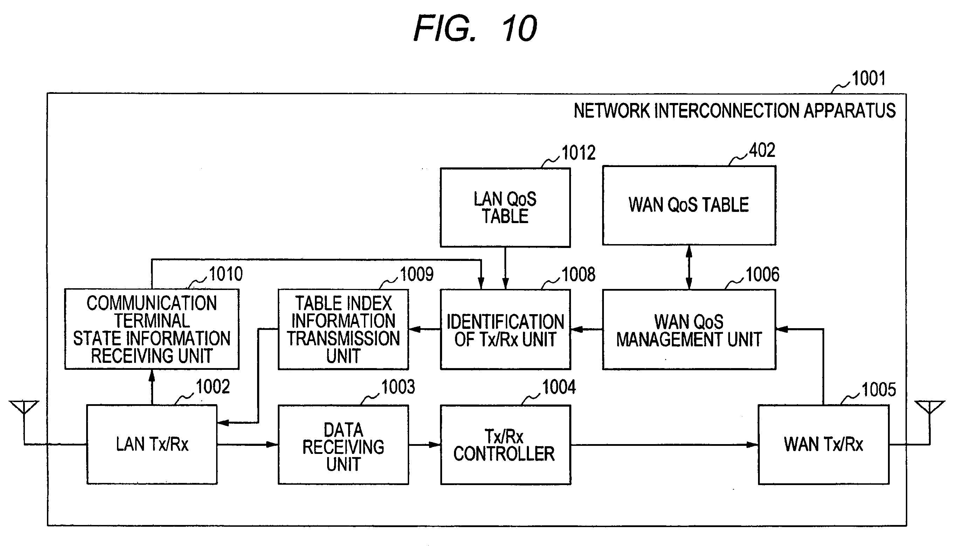

Fig. 10 is a block diagram showing the network interconnection apparatus 1001 in the second embodiment of the invention.

The network interconnection apparatus 1001 includes a communication terminal state receiving unit 1010 and a LAN QoS table 1012 in addition to the configuration with which the network interconnection apparatus 105 in the first embodiment is provided. The LAN QoS table 1012 is the same as the LAN QoS table 401 shown in Fig. 4A and the network interconnection apparatus 1001 acquires the same LAN QoS table 1012 as a LAN QoS table 401 provided to the communication terminal 901 beforehand.

The communication terminal state receiving unit 1010 receives information showing a state of the communication terminal 901 via a LAN Tx/Rx unit 1002. When the communication terminal state receiving unit 1010 acquires information showing states of all communication terminals 901, it calculates an amount of data generated per unit time of each priority in all the communication terminals 901 and inputs the calculated value to a Tx/Rx method identification unit 1008. The Tx/Rx method identification unit 1008 refers to the LAN QoS table 1012 based upon the input value and updates a table index information 403 included in the Tx/Rx method identification unit 1008.

A method in which the network interconnection apparatus 1001 in the second embodiment updates the table index information 403 will be described below.

Three stages of high, medium and low ones as priority are added to data which the communication terminal 901 acquires from the sensor unit 902, and the communication terminal 901 and the network interconnection apparatus 1001 use the LAN QoS table 1012. Table selection criteria 4034 has two types of combination (hereinafter called a pattern 1) that each redundancy 4012 for each '1', '2', '3' as a QoS level 4011 is specified for each data the priority of which is "high", "medium", "low" and combination (hereinafter called a pattern 2) that each redundancy 4012 for each '2', '3', '4' as the QoS level 4011 is specified for the above-mentioned each data.

Further, a data rate of each priority generated in the whole local area network 101 varies from moment to moment, however, suppose that the Tx/Rx method identification unit 1008 acquires information showing that each data the priority of which is "high", "medium", "low" is respectively generated by 2 Mbps, 1 Mbps, 1 Mbps per unit time in the whole local area network 101. The Tx/Rx method identification unit 1008 refers to the LAN QoS table 1012 based upon the information showing the generated data rate and calculates an amount of data generated per unit time which reaches the network interconnection apparatus 1001 when the communication terminal 901 transmits data according to the redundancy in each pattern. The Tx/Rx method identification unit determines a threshold of a data transmission rate 4031 of the table index information 4034.

Concretely, the Tx/Rx method identification unit 1008 refers to the LAN QoS table 1012 and acquires each sum by calculating an expression, "(an amount of data generated per unit time) x (redundancy)" in the pattern 1 and in the pattern 2. That is, when the communication terminal 901 transmits data with redundancy in the pattern 1, it is estimated that the data of 11 Mbps acquired by calculating an expression, "2 Mbps x 4 + 1 Mbps x 2 + 1 Mbps x 1" reaches the network interconnection apparatus 1001, and when the communication terminal transmits data with redundancy in the pattern 2, it is estimated that the data of 5 Mbps acquired by calculating an expression, "2 Mbps x 2 + 1 Mbps x 1 + 1 Mbps x 0" reaches the network interconnection apparatus 1001.

As the overflow of a buffer is caused in the network interconnection apparatus 1001 when transmission rate transmittable to a wide area network 106 exceeds an amount of data generated per unit time that reaches the network interconnection apparatus 1001, the Tx/Rx method identification unit 1008 sets a threshold of the condition 4031 to 11 Mbps based upon the above-mentioned result of calculation. When the transmission rate transmittable to the wide area network 106 is 11 or more Mbps, the Tx/Rx method identification unit specifies the redundancy in the pattern 1 and when the transmission rate transmittable to the wide area network is below 11 Mbps, the Tx/Rx method identification unit updates the table index information 403 so that the redundancy in the pattern 2 is specified.

According to the second embodiment, even if an amount of data generated per unit time generated in the local area network 101 varies from moment to moment, the overflow of the buffer in the network interconnection apparatus 1001 is avoided when the network interconnection apparatus 1001 updates the table index information 403 and data the priority of which is high can be prevented from being lost.

A third embodiment according to the invention will be described below.

A network interconnection apparatus 105 and a communication terminal 201 include plural tables showing the combination of the priority of data and redundancy in place of the LAN QoS table 401 shown in Fig. 4A. In this case, the network interconnection apparatus 105 may also select the certain table showing the combination of the priority of data and redundancy as table selection criteria 4034 used by the communication terminal 201 differently from the table index information 403 shown in Fig. 4C that holds the combination of the QoS level and the priority out of the plural tables.

In the second embodiment, the network interconnection apparatus 105 may also hold the combination of the priority of data and redundancy as in the third embodiment.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. A network system comprising:
one or more terminals (102, 103, 104) that transmit acquired data to a first network (101);
a network interconnection device (105) that is connected to the one or more terminals (102, 103, 104) via the first network (101) and which receives the data from the one or more terminals (102,103,104); and
a management server that is connected to the network interconnection device (105) via a second network (106) and which receives the data from the network interconnection device (105),
wherein the one or more terminals (102, 103, 104) transmit the same data to the network interconnection device (105) via the first network (101) by a frequency corresponding to redundancy, and
wherein the data includes the priority according to the contents of the data,
the system **characterized in that** the network interconnection device (105) acquires the communication quality of the second network (106) and instructs the one or more terminals (102, 103, 104) to transmit the data according to redundancy determined based upon the acquired communication quality and the priority.

2. The network system according to claim 1,
wherein the one or more terminals (102, 103, 104) hold the redundancy and a quality level corresponding to the redundancy;
wherein the network interconnection device (105) holds the combination of a condition of the communication quality, the priority and the quality level, extracts the combination of the priority and the quality level according to the acquired condition of communication quality, and transmits the extracted combination of the priority and the quality level to the one or more terminals (102, 103, 104); and
wherein the one or more terminals (102, 103, 104) select redundancy corresponding to the priority by selecting the redundancy corresponding to the quality level in the transmitted combination and transmits the data according to the selected redundancy.

3. The network system according to claim 1,
wherein the network interconnection device (105) holds the combination of a condition of the communication quality, the priority and the redundancy, extracts the combination of the priority and the redundancy according to the acquired condition of communication quality, and transmits the extracted combination of the priority and the redundancy to the one or more terminals (102, 103, 104); and
wherein the one or more terminals (102, 103, 104) select the redundancy corresponding to the priority in the transmitted combination and transmits the data according to the selected redundancy.

4. The network system according to claim 2,
wherein the network interconnection device (105) collects an amount of data generated per unit time every priority of data generated by observation by the one or more terminals, calculates a data rate every priority transmitted to the second network (106) by multiplying the collected data rates per unit time every priority and the redundancy, specifies the combination of priority and redundancy corresponding to the data rate transmittable at the communication quality of the second network (106) out of the calculated data rates every priority transmitted to the second network (106), and transmits the specified combination of the priority and the redundancy to the one or more terminals (102, 103, 104); and
wherein the one or more terminals (102, 103, 104) select the redundancy corresponding to the priority in the specified combination.

5. The network system according to claim 4, wherein the network interconnection device (105) holds the redundancy and a quality level corresponding to the redundancy and updates a condition of the communication quality corresponding to the specified combination of the priority and the redundancy to the data rate transmittable at the communication quality of the second network (106).

6. The network system according to claim 1,
wherein the network interconnection device (105) includes:
a first network Tx/Rx unit that communicates with the first network (101);
a first network state collecting unit that collects a data rate every priority of data transmitted to the first network (101);
a second network Tx/Rx unit that communicates with the second network (106);
a second network quality acquiring unit that acquires the communication quality of the second network (106);
a plurality of redundancy tables having the combination of the priority and the redundancy of data transmitted from the one or more terminals (102, 103, 104); and
a Tx/Rx method identification unit that extracts the combination of the priority and the redundancy of data transmitted from the one or more terminals (102, 103, 104);
wherein the Tx/Rx method identification unit calculates a data rate of data transmitted to the second network (106) by multiplying data rates every priority collected by the first network state collecting unit and redundancy corresponding to the priority selected from the redundancy table and specifies the combination of the priority and the redundancy corresponding to the data rate transmittable at the communication quality of the second network (106) out of the calculated plurality of data rates transmitted to the second network (106) from the redundancy table; and
wherein the first network Tx/Rx unit transmits the specified combination of the priority and the redundancy to the one or more terminals (102, 103, 104).

7. The network system according to claim 1,
wherein the one or more terminals (102, 103, 104) include:
a sensor unit that observes predetermined physical quantity;
a data receiving unit that stores data showing a result observed by the sensor unit (202);
a plurality of redundancy tables including the combination of the priority of the data and the redundancy;
a Tx/Rx controller that allocates redundancy to the data in the data receiving unit based upon the redundancy table; and
a third network Tx/Rx unit on the side of the one or more terminals (102, 103, 104) that communicates with the first network (101),
wherein the one or more terminals (102, 103, 104) receive the combination of priority and redundancy transmitted from the network interconnection device (105); and
wherein the Tx/Rx controller transmits the data to the first network (101) by a frequency corresponding to the redundancy based upon the received combination.

8. A network interconnection device connected, via a first network (101), to one or more terminals (102, 103, 104) that transmit acquired data to the first network (101) and connected, via a second network (106), to a management server that receives the data via the second network (106),
wherein the data includes priority according to the contents of the data; and
wherein the network interconnection device (105) receives the same data from the one or more terminals (102, 103, 104) via the first network (101) by a frequency corresponding to redundancy, the network interconnection device (105) **characterized in that** it acquires the communication quality of the second network (106) and instructs the one or more terminals (102, 103, 104) to transmit the data according to the redundancy determined based upon the acquired communication quality and the priority.

9. The network interconnection device according to claim 8,
wherein the network interconnection device (105) holds the combination of a condition of the communication quality, the priority and a quality level;
wherein the network interconnection device (105) extracts the combination of the priority and the quality level according to the acquired condition of communication quality;
wherein the network interconnection device (105) transmits the extracted combination of the priority and the quality level to the one or more terminals (102,103, 104) so as to instruct the one or more terminals (102, 103, 104) to select redundancy with which the data is to be transmitted; and
wherein the network interconnection device (105) instructs the one or more terminals (102, 103, 104) to transmit the data according to the redundancy.

10. The network interconnection device according to claim 8,
wherein the network interconnection device (105) holds the combination of the condition of communication quality, the priority and the redundancy;
wherein the network interconnection device (105) extracts the combination of the priority and the redundancy according to the acquired condition of communication quality;
wherein the network interconnection device (105) transmits the extracted combination of the priority and the redundancy to the one or more terminals (102, 103, 104) so as to instruct the one or more terminals (102, 103, 104) to select redundancy with which the data is to be transmitted; and
wherein the network interconnection device (105) instructs the one or more terminals (102, 103, 104) to transmit the data according to the redundancy.

11. The network interconnection device according to claim 9, wherein:
the network interconnection device (105) holds the redundancy and a qualify level corresponding to the redundancy, collects an amount of data generated per unit time every priority of data generated by observation by the one or more terminals, calculates a plurality of data rates every priority transmitted to the second network (106) by multiplying the collected data rates per unit time every priority and the redundancy, specifies the combination of priority and redundancy corresponding to the data rate transmittable at the communication quality of the second network (106) out of the calculated plurality of data rates every priority transmitted to the second network (106), and transmits the specified combination of the priority and the redundancy to the one or more terminals (102, 103, 104); and
wherein the one or more terminals (102, 103, 104) select redundancy corresponding to the priority in the specified combination and updates a condition of the communication quality corresponding to the specified combination of the priority and the redundancy to the data rate transmittable at the communication quality of the second network (106).

12. The network interconnection device according to claim 8,
wherein the network interconnection device (105) includes:
a first network Tx/Rx unit that communicates with the first network (101);
a first network state collecting unit that collects a data rate every priority of data transmitted to the first network (101);
a second network Tx/Rx unit that communicates with the second network (106);
a second network quality acquiring unit that acquires the communication quality of the second network (106);
a plurality of redundancy tables having the combinations of the priority and the redundancy of data transmitted from the one or more terminals (102, 103, 104); and
a Tx/Rx method identification unit that extracts the combination of the priority and the redundancy of the data transmitted from the one or more terminals (102, 103, 104),
wherein the Tx/Rx method identification unit calculates a data rate transmitted to the second network (106) by multiplying data rates every priority collected by the first network state collecting unit and redundancy corresponding to the redundancy selected from the redundancy table and specifies the combination of the priority and the redundancy corresponding to the data rate transmittable at the communication quality of the second network (106) out of the calculated plurality of data rates transmitted to the second network (106) from the redundancy table; and
wherein the first network Tx/Rx unit transmits the specified combination of the priority and the redundancy to the one or more terminals (102, 103, 104),

13. A data transmission method in a network system including one or more terminals that transmit acquired data to a first network (101), a network interconnection device (105) which is connected to the one or more terminals (102, 103, 104) via the first network (101) and which receives the data from the one or more terminals (102, 103, 104) and a management server which is connected to the network interconnection device (105) via a second network (106) and which receives the data from the network interconnection device (105), the data containing the priority according to the contents of the data,
the method comprising:
the one or more terminals (102, 103, 104) transmitting the same data to the network interconnection device (105) via the first network (101) by a frequency corresponding to redundancy; and
the network interconnection device (105) acquiring the communication quality of the second network (106);
the method **characterized in that** it further comprises:
the network interconnection device (105) instructing the one or more terminals (102, 103, 104) to transmit the data according to redundancy determined based upon the acquired communication quality and the priority.

14. The data transmission method according to claim 13,
the one or more terminals (102, 103, 104) holding the redundancy and a quality level corresponding to the redundancy; and
the network interconnection device (105) holding the combination of a condition of the communication quality, the priority and the quality level;
the method comprising:
the network interconnection device (105) extracting the combination of the priority and the quality level according to the acquired condition of communication quality;
the network interconnection device (105) transmitting the extracted combination of the priority and the quality level to the one or more terminals (102, 103, 104);
the one or more terminals (102, 103, 104) selecting redundancy corresponding to the priority by selecting the redundancy corresponding to the quality level in the transmitted combination; and
the one or more terminals (102, 103, 104) transmitting the data according to the selected redundancy.

15. The data transmission method according to claim 13,
the network interconnection device (105) holding the combination of a condition of the communication quality, the priority and the redundancy,
the method comprising:
the network interconnection device (105) extracting the combination of the priority and the redundancy according to the acquired condition of communication quality;
the network interconnection device (105) transmitting the extracted combination of the priority and the redundancy to the one or more terminals (102, 103, 104);
the one or more terminals (102, 103, 104) selecting redundancy corresponding to the priority in the transmitted combination; and
the one or more terminals (102, 103, 104) transmitting the data according to the selected redundancy.

## Patentansprüche

1. Netzwerksystem mit:
einem oder mehreren Endgeräten (102, 103, 104), die erfasste Daten an ein erstes Netzwerk (101) übertragen;
einer Netzwerkverbindungsvorrichtung (105), die mit dem einen oder den mehreren Endgeräten (102, 103, 104) über das erste Netzwerk (101) verbunden ist und die die Daten von dem einen oder den mehreren Endgeräten (102, 103, 104) empfängt; und
einem Managementserver, der über ein zweites Netzwerk (106) mit der Netzwerkverbindungsvorrichtung (105) verbunden ist und der die Daten von der Netzwerkverbindungsvorrichtung (105) empfängt,
wobei das eine oder die mehreren Endgeräte (102, 103, 104) dieselben Daten an die Netzwerkverbindungsvorrichtung (105) über das erste Netzwerk (101) durch eine Frequenz übertragen, die Redundanz entspricht, und
wobei die Daten die Priorität gemäß den Inhalten der Daten einschließen,
wobei das System **dadurch gekennzeichnet ist, dass** die Netzwerkverbindungsvorrichtung (105) die Kommunikationsqualität des zweiten Netzwerks (106) erfasst und das eine oder die mehreren Endgeräte (102, 103, 104) anweist, die Daten gemäß der auf der Grundlage der erfassten Kommunikationsqualität und der Priorität bestimmten Redundanz überträgt.

2. Netzwerksystem nach Anspruch 1,
wobei das eine oder die mehreren Endgeräte (102, 103, 104) die Redundanz und einen Qualitätspegel entsprechend der Redundanz halten;
wobei die Netzwerkverbindungsvorrichtung (105) die Kombination eines Zustands der Kommunikationsqualität, der Priorität und des Qualitätspegels hält, die Kombination der Priorität und des Qualitätspegels gemäß dem erfassten Zustand der Kommunikationsqualität extrahiert und die extrahierte Kombination der Priorität und des Prioritätspegels an das eine oder die mehreren Endgeräte (102, 103, 104) überträgt; und
wobei das eine oder die mehreren Endgeräte (102, 103, 104) die Redundanz entsprechend der Priorität durch Auswählen der Redundanz auswählen, die dem Qualitätspegel in der übertragenen Kombination entspricht, und die Daten gemäß der ausgewählten Redundanz übertragen.

3. Netzwerksystem nach Anspruch 1,
wobei die Netzwerkverbindungsvorrichtung (105) die Kombination eines Zustands der Kommunikationsqualität, der Priorität und der Redundanz hält, die Kombination der Priorität und der Redundanz gemäß dem erfassten Zustand der Kommunikationsqualität extrahiert und die extrahierte Kombination der Priorität und der Redundanz an das eine oder die mehreren Endgeräte (102, 103, 104) überträgt; und
wobei das eine oder die mehreren Endgeräte (102, 103, 104) die Redundanz auswählen, die der Priorität in der übertragenen Kombination entspricht, und die Daten gemäß der ausgewählten Redundanz übertragen.

4. Netzwerksystem nach Anspruch 2,
wobei die Netzwerkverbindungsvorrichtung (105) eine Datenmenge sammelt, die pro Zeiteinheit jeder Datenpriorität erzeugt wird, die durch Beobachtung durch das eine oder die mehreren Endgeräte erzeugt wird, eine Datenrate jeder Priorität, die an das zweite Netzwerk (106) übertragen wird, durch Multiplizieren der gesammelten Datenraten pro Zeiteinheit jeder Priorität mit der Redundanz berechnet, die Kombination von Priorität und Redundanz entsprechend der Datenrate spezifiziert, die mit der Kommunikationsqualität des zweiten Netzwerks (106) aus den berechneten Datenraten jeder Priorität übertragbar ist, die an das zweite Netzwerk (106) übertragen wurden, und die spezifizierte Kombination der Priorität und der Redundanz an das eine oder die mehreren Endgeräte (102, 103, 104) überträgt; und
wobei das eine oder die mehreren Endgeräte (102, 103, 104) die Redundanz auswählen, die der Priorität in der spezifizierten Kombination entspricht.

5. Netzwerksystem nach Anspruch 4, wobei die Netzwerkverbindungsvorrichtung (105) die Redundanz und einen Qualitätspegel entsprechend der Redundanz hält und einen Zustand der Kommunikationsqualität entsprechend der spezifizierten Kombination der Priorität und der Redundanz auf die Datenrate aktualisiert, die mit der Kommunikationsqualität des zweiten Netzwerks (106) übertragbar ist.

6. Netzwerksystem nach Anspruch 1,
wobei die Netzwerkverbindungsvorrichtung (105) einschließt:
eine erste Netzwerk-Tx/Rx-Einheit, die mit dem ersten Netzwerk (101) kommuniziert;
eine erste Netzwerkzustand-Sammeleinheit, die eine Datenrate jeder Datenpriorität sammelt, die an das erste Netzwerk (101) übertragen wird;
eine zweite Notzwerk-Tx/Rx-Einheit, die mit dem zweiten Netzwerk (106) kommuniziert;
eine zweite Netzwerkqualitäts-Erfassungseinheit, die die Kommunikationsqualität des zweiten Netzwerks (106) erfasst;
mehrere Redundanztabellen mit der Kombination der Priorität und der Redundanz von Daten, die von dem einen oder den mehreren Endgeräten (102, 103, 104) übertragen werden; und
eine Tx/Rx-Verfahrensidentifikationseinheit, die die Kombination der Priorität und der Redundanz der Daten extrahiert, die von dem einen oder den mehreren Endgeräten (102, 103, 104) übertragen werden;
wobei die Tx/Rx-Verfahrensidentifikationseinheit eine Datenrate von an das zweite Netzwerk (106) übertragenen Daten durch Multiplizieren von Datenraten jeder Priorität, die von der ersten Netzwerkzustand-Sammeleinheit gesammelt werden, mit der Redundanz, die der aus der Redundanztabelle ausgewählten Priorität entspricht, berechnet und die Kombination der Priorität und der Redundanz entsprechend der Datenrate spezifiziert, die mit der Kommunikationsqualität des zweiten Netzwerks (106) aus den berechneten mehreren Datenraten übertragen werden kann, die an das zweite Netzwerk (106) von der Redundanztabelle übertragen werden; und
wobei die erste Netzwerk-Tx/Rx-Einheit die spezifizierte Kombination der Priorität und der Redundanz an das eine oder die mehreren Endgeräte (102, 103, 104) überträgt.

7. Netzwerksystem nach Anspruch 1,
wobei das eine oder die mehreren Endgeräte (102, 103, 104) einschließen:
eine Sensoreinheit, die eine vorgegebene physikalische Quantität beobachtet;
eine Datenempfangseinheit, welche Daten speichert, die ein von der Sensoreinheit (202) beobachtetes Ergebnis zeigen;
mehrere Redundanztabellen einschließlich der Kombination der Priorität der Daten und der Redundanz;
eine Tx/Rx-Steuerung, die die Redundanz den Daten in der Datenempfangseinheit auf der Grundlage der Redundanztabelle zuteilt; und
eine dritte Netzwerk-Tx/Rx-Einheit auf der Seite des einen oder der mehreren Endgeräte (102, 103, 104), die mit dem ersten Netzwerk (101) kommuniziert,
wobei das eine oder die mehreren Endgeräte (102, 103, 104) die Kombination von Priorität und Redundanz empfangen, die von der Netzwerkverbindungsvorrichtung (105) übertragen wird; und
wobei die Tx/Rx-Steuerung die Daten an das erste Netzwerk (101) durch eine Frequenz überträgt, die der Redundanz auf der Grundlage der empfangenen Kombination entspricht.

8. Netzwerkverbindungsvorrichtung, die über ein erstes Netzwerk (101) mit einem oder mehreren Endgeräten (102, 103, 104) verbunden ist, welche erfasste Daten an das erste Netzwerk (101) übertragen, und über ein zweites Netzwerk (106) mit einem Managementserver verbunden ist, der die Daten über das zweite Netzwerk (106) empfängt,
wobei die Daten eine Priorität gemäß den Inhalten der Daten einschließen; und wobei die Netzwerkverbindungsvorrichtung (105) dieselben Daten von dem einen oder den mehreren Endgeräten (102, 103, 104) über das erste Netzwerk (101) durch eine Frequenz empfangen, die der Redundanz entsprechen,
wobei die Netzwerkverbindungsvorrichtung (105) **dadurch gekennzeichnet ist, dass** sie die Kommunikationsqualität des zweiten Netzwerks (106) erfasst und das eine oder die mehreren Endgeräte (102, 103, 104) anweist, die Daten gemäß der Redundanz zu übertragen, die auf der Grundlage der erfassten Kommunikationsqualität und der Priorität bestimmt ist.

9. Netzwerkverbindungsvorrichtung (105) nach Anspruch 8,
wobei die Netzwerkverbindungsvorrichtung (105) die Kombination eines Zustands der Kommunikationsqualität, der Priorität und eines Qualitätspegels hält;
wobei die Netzwerkverbindungsvorrichtung (105) die Kombination der Priorität und des Qualitätspegels gemäß des erfassten Zustands der Kommunikationsqualität extrahiert;
wobei die Netzwerkverbindungsvorrichtung (105) die extrahierte Kombination der Priorität und des Qualitätspegels an das eine oder die mehreren Endgeräte (102, 103, 104) überträgt, um das eine oder die mehreren Endgeräte (102, 103, 104) anzuweisen, die Redundanz auszuwählen, mit welcher die Daten zu übertragen sind; und
wobei die Netzwerkverbindungsvorrichtung (105) das eine oder die mehreren Endgeräte (102, 103, 104) anweist, die Daten nach Maßgabe der Redundanz zu übertragen.

10. Netzwerkverbindungsvorrichtung (105) nach Anspruch 8,
wobei die Netzwerkverbindungsvorrichtung (105) die Kombination des Zustands der Kommunikationsqualität, der Priorität und der Redundanz hält;
wobei die Netzwerkverbindungsvorrichtung (105) die Kombination der Priorität und der Redundanz gemäß dem erfassten Zustand der Kommunikationsqualität extrahiert;
wobei die Netzwerkverbindungsvorrichtung (105) die extrahierte Kombination der Priorität und die Redundanz an das eine oder die mehreren Endgeräte (102, 103, 104) überträgt, um das eine oder die mehreren Endgeräte (102, 103, 104) anzuweisen, die Redundanz auszuwählen; mit welcher die Daten übertragen werden sollen; und
wobei die Netzwerkverbindungsvorrichtung (105) das eine oder die mehreren Endgeräte (102, 103, 104) anweist, die Daten nach Maßgabe der Redundanz zu übertragen.

11. Netzwerkverbindungsvorrichtung (105) nach Anspruch 9, wobei:
die Netzwerkverbindungsvorrichtung (105) die Redundanz und einen Qualitätspegel entsprechend der Redundanz hält, eine Datenmenge sammelt, die pro Zeiteinheit jeder Datenpriorität erzeugt wird, die durch Beobachtung durch das eine oder die mehreren Endgeräte erzeugt wird, mehrere Datenraten jeder Priorität, die an das zweite Netzwerk (106) übertragen wird, durch Multiplizieren der gesammelten Datenraten pro Zeiteinheit jede Priorität mit der Redundanz berechnet, die Kombination von Priorität und Redundanz entsprechend der Datenrate spezifiziert, die mit der Kommunikationsqualität des zweiten Netzwerks (106) aus den berechneten mehreren Datenraten jeder Priorität übertragen werden kann, die an das zweite Netzwerk (106) übertragen werden, und die spezifizierte Kombination der Priorität und der Redundanz an das eine oder die mehreren Endgeräte (102, 103, 104) überträgt; und
wobei das eine oder die mehreren Endgeräte (102, 103, 104) eine Redundanz entsprechend der Priorität in der spezifizierten Kombination auswählen und einen Zustand der Kommunikationsqualität entsprechend der spezifizierten Kombination der Priorität und der Redundanz auf die Datenrate aktualisieren, die mit der Kommunikationsqualität des zweiten Netzwerks (106) übertragen werden kann.

12. Netzwerkverbindungsvorrichtung (105) gemäß Anspruch 8,
wobei die Netzwerkverbindungsvorrichtung (105) einschließt:
eine erste Netzwerk-Tx/Rx-Einheit, die mit dem ersten Netzwerk (101) kommuniziert;
eine erste Netzwerkzustand-Sammeleinheit, die eine Datenrate jeder Datenpriorität sammelt, die an das erste Netzwerk (101) übertragen wird;
eine zweite Netzwerk-Tx/Rx-Einheit, die mit dem zweiten Netzwerk (106) kommuniziert;
eine zweite Netzwerkqualitäts-Erfassungseinheit, die die Kommunikationsqualität des zweiten Netzwerks (106) erfasst;
mehrere Redundanztabellen mit den Kombinationen der Priorität und der Redundanz von Daten, die von dem einen oder den mehreren Endgeräten (102, 103, 104) übertragen werden; und
eine Tx/Rx-Verfahrensidentifikationseinheit, die die Kombination der Priorität und der Redundanz der Daten extrahiert, die von dem einen oder den mehreren Endgeräten (102, 103, 104) übertragen werden,
wobei die Tx/Rx-Verfahrensidentifikationseinheit eine Datenrate von an das zweite Netzwerk (106) übertragenen Daten durch Multiplizieren von Datenraten jeder Priorität, die von der ersten Netzwerkzustand-Sammeleinheit gesammelt werden, mit der Redundanz, die der aus der Redundanztabelle ausgewählten Priorität entspricht, berechnet und die Kombination der Priorität und der Redundanz entsprechend der Datenrate spezifiziert, die mit der Kommunikationsqualität des zweiten Netzwerks (106) aus den berechneten mehreren Datenraten übertragen werden kann, die an das zweite Netzwerk (106) von der Redundanztabelle übertragen werden; und
wobei die erste Netzwerk-Tx/Rx-Einheit die spezifizierte Kombination der Priorität und der Redundanz an das eine oder die mehreren Endgeräte (102, 103, 104) überträgt.

13. Datenübertragungsverfahren in einem Netzwerksystem mit einem oder mehreren Endgeräten, welche erfasste Daten an ein erstes Netzwerk (101) übertragen, einer Netzwerkverbindungsvorrichtung (105), die mit dem einen oder den mehreren Endgeräten (102, 103, 104) über das erste Netzwerk (101) verbunden ist und welche die Daten von dem einen oder den mehreren Endgeräten (102, 103, 104) empfängt, und einem Managementserver, der mit der Netzwerkverbindungsvorrichtung (105) über ein zweites Netzwerk (106) verbunden ist und welcher die Daten von der Netzwerkverbindungsvorrichtung (105) empfängt, wobei die Daten die Priorität entsprechend den Inhalten der Daten enthalten,
wobei das Verfahren umfasst, dass:
das eine oder die mehreren Endgeräte (102, 103, 104) dieselben Daten an die Netzwerkverbindungsvorrichtung (105) über das erste Netzwerk (101) durch eine Frequenz übertragen, die der Redundanz entspricht; und
die Netzwerkverbindungsvorrichtung (105) die Kommunikationsqualität des zweiten Netzwerks (106) erfasst; wobei das Verfahren **dadurch gekennzeichnet ist, dass** es ferner umfasst, dass:
die Netzwerkverbindungsvorrichtung (105) das eine oder die mehreren Endgeräte (102, 103, 104) anweist, die Daten nach Maßgabe der Redundanz zu übertragen, die auf der Grundlage der erfassten Kommunikationsqualität und der Priorität bestimmt wird.

14. Datenübertragungsverfahren nach Anspruch 13,
wobei das eine oder die mehreren Endgeräte (102, 103, 104) die Redundanz und einen Qualitätspegel entsprechend der Redundanz halten; und
die Netzwerkverbindungsvorrichtung (105) die Kombination eines Zustands der Kommunikationsqualität, der Priorität und des Qualitätspegels hält;
wobei das Verfahren umfasst, dass:
die Netzwerkverbindungsvorrichtung (105) die Kombination der Priorität und des Qualitätspegels gemäß dem erfassten Zustand der Kommunikationsqualität extrahiert;
die Netzwerkverbindungsvorrichtung (105) die extrahierte Kombination der Priorität und des Qualitätspegels an das eine oder die mehreren Endgeräte (102, 103, 104) überträgt;
das eine oder die mehreren Endgeräte (102, 103, 104) die Redundanz, die der Priorität entspricht, durch Auswählen der Redundanz, die dem Qualitätspegel in der übertragenen Kombination entspricht, auswählen; und
das eine oder die mehreren Endgeräte (102, 103, 104) die Daten nach Maßgabe der ausgewählten Redundanz übertragen.

15. Datenübertragungsverfahren nach Anspruch 13,
wobei die Netzwerkverbindungsvorrichtung (105) die Kombination eines Zustands der Kommunikationsqualität, der Priorität und der Redundanz hält,
wobei das Verfahren umfasst, dass:
die Netzwerkverbindungsvorrichtung (105) die Kombination der Priorität und der Redundanz gemäß dem erfassten Zustand der Kommunikationsqualität extrahiert;
die Netzwerkverbindungsvorrichtung (105) die extrahierte Kombination der Priorität und der Redundanz an das eine oder die mehreren Endgeräte (102, 103, 104) überträgt;
das eine oder die mehreren Endgeräte (102, 103, 104) die Redundanz, die der Priorität in der übertragenen Kombination entspricht, auswählen; und
das eine oder die mehreren Endgeräte (102, 103, 104) die Daten nach Maßgabe der ausgewählten Redundanz übertragen.

## Revendications

1. Système de réseaux, comprenant :
un ou plusieurs terminaux (102, 103, 104) qui transmettent des données acquises à un premier réseau (101) ;
un dispositif d'interconnexion de réseaux (105) qui est connecté auxdits un ou plusieurs terminaux (102, 103, 104) via le premier réseau (101) et qui reçoivent les données provenant desdits un ou plusieurs terminaux (102, 103, 104) ; et
un serveur de gestion qui est connecté au dispositif d'interconnexion de réseaux (105) via un second réseau (106) et qui reçoit les données provenant du dispositif d'interconnexion de réseaux (105),
dans lequel lesdits un ou plusieurs terminaux (102, 103, 104) transmettent les mêmes données au dispositif d'interconnexion de réseaux (105) via le premier réseau (101) par une fréquence correspondant à une redondance, et
dans lequel les données incluent une priorité en accord avec le contenu des données,
le système étant **caractérisé en ce que** le dispositif d'interconnexion de réseaux (105) acquiert la qualité de communication du second réseau (106) et donne instruction auxdits un ou plusieurs terminaux (102, 103, 104) de transmettre les données conformément à la redondance déterminée en se basant sur la qualité de communication acquise et sur la priorité.

2. Système de réseaux selon la revendication 1,
dans lequel lesdits un ou plusieurs terminaux (102, 103, 104) contiennent la redondance et un niveau de qualité correspondant à la redondance;
dans lequel le dispositif d'interconnexion de réseaux (105) contient la combinaison d'une condition de la qualité de communication, de la priorité et du niveau de qualité, il extrait la combinaison de la priorité et du niveau de qualité en accord avec la condition acquise de la qualité de communication, et il transmet la combinaison extraite de la priorité et du niveau de qualité auxdits un ou plusieurs terminaux (102, 103, 104);et
dans lequel lesdits un ou plusieurs terminaux (102, 103, 104) sélectionnent la redondance correspondant à la priorité en sélectionnant la redondance correspondant au niveau de qualité dans la combinaison transmise, et transmettent les données en accord avec la redondance sélectionnée.

3. Système de réseaux selon la revendication 1,
dans lequel le dispositif d'interconnexion de réseaux (105) contient la combinaison d'une condition de la qualité de communication, de la priorité et de la redondance, il extrait la combinaison de la priorité et de la redondance en accord avec la condition acquise de qualité de communication, et il transmet la combinaison extraite de la priorité et de la redondance auxdits un ou plusieurs terminaux (102, 103, 104) ; et dans lequel lesdits un ou plusieurs terminaux (102, 103, 104) sélectionnent la redondance correspondant à la priorité dans la combinaison transmise et transmettent les données en accord avec la redondance sélectionnée.

4. Système de réseaux selon la revendication 2,
dans lequel le dispositif d'interconnexion de réseaux (105) recueille une quantité de données générées par unité de temps à chaque priorité de données générées par observation par lesdits un ou plusieurs terminaux, il calcule un taux de données à chaque priorité transmise au second réseau (106) en multipliant les taux de données recueillies par unité de temps à chaque priorité et la redondance, il spécifie la combinaison de priorité et de redondance correspondant au taux de données susceptibles d'être transmises à la qualité de communication du second réseau (106) parmi les taux de données calculés à chaque priorité transmise au second réseau (106), et il transmet la combinaison spécifiée de la priorité et de la redondance auxdits un ou plusieurs terminaux (102, 103, 104) ; et
dans lequel lesdits un ou plusieurs terminaux (102, 103, 104) sélectionnent la redondance correspondant à la priorité dans la combinaison spécifiée.

5. Système de réseaux selon la revendication 4, dans lequel le dispositif d'interconnexion de réseaux (106) contient la redondance et un niveau de qualité correspondant à la redondance, et met à jour une condition de la qualité de communication correspondant à la combinaison spécifiée de la priorité et de la redondance au taux de données susceptibles d'être transmise à la qualité de communication du second réseau (106).

6. Système de réseaux selon la revendication 1,
dans lequel le dispositif d'interconnexion de réseaux (105) inclut :
une première unité de réseau Tx/Rx qui communique avec le premier réseau (101) ;
une première unité de collecte d'état de réseau qui collecte un taux de données à chaque priorité des données transmises au premier réseau (101) ;
une seconde unité de réseau Tx/Rx qui communique avec le second réseau (106) ;
une unité d'acquisition de qualité du second réseau qui acquiert la qualité de communication du second réseau (106) ;
une pluralité de tables de redondance ayant la combinaison de la priorité et de la redondance des données transmises depuis lesdits un ou plusieurs terminaux (102, 103, 104) ; et
une unité d'identification à méthode Tx/Rx qui extrait la combinaison de la priorité et de la redondance des données transmises depuis lesdits un ou plusieurs terminaux (102, 103, 104) ;
dans lequel l'unité d'identification à méthode Tx/Rx calcule un taux de données des données transmises au second réseau (106) en multipliant des taux de données à chaque priorité recueillie par l'unité de collecte d'état du premier réseau et la redondance correspondant à la priorité sélectionnée depuis la première table de redondance, et spécifie la combinaison de la priorité et de la redondance correspondant au taux de données susceptibles d'être transmises à la qualité de communication du second réseau (106) parmi la pluralité calculée de taux de données transmises au second réseau (106) depuis la table de redondance ; et
dans lequel la première unité de réseau Tx/Rx transmet la combinaison spécifiée de la priorité est de la redondance auxdits un ou plusieurs terminaux (102, 103, 104),

7. Système de réseaux selon la revendication 1,
dans lequel lesdits un ou plusieurs terminaux (102, 103, 104) incluent :
une unité de capteur qui observe une quantité physique prédéterminée ;
une unité de réception de données qui stocke des données présentant un résultat observé par l'unité de capteur (202) ;
une pluralité de tables de redondance incluant la combinaison de la priorité des données et de la redondance ;
un contrôleur Tx/Rx qui alloue une redondance aux données dans l'unité de réception de données en se basant sur la table de redondance ; et
une troisième unité à réseau Tx/Px sur le côté desdits un ou plusieurs terminaux (102, 103, 104), qui communique avec le premier réseau (101),
dans lequel lesdits un ou plusieurs terminaux (102, 103, 104) reçoivent la combinaison de la priorité et de la redondance transmise depuis le dispositif d'interconnexion de réseaux (105) ; et
dans lequel le contrôleur Tx/Rx transmet les données au premier réseau (101) à une fréquence correspondant à la redondance en se basant sur la combinaison reçue.

8. Dispositif d'interconnexion de réseaux connecté, via un premier réseau (101), à un ou plusieurs terminaux (102, 103, 104) qui transmettent des données acquises au premier réseau (101) et connecté, via un second réseau (106), à un serveur de gestion qui reçoit les données via le second réseau (106),
dans lequel les données incluent une priorité en accord avec le contenu des données ; et
dans lequel le dispositif d'interconnexion de réseaux (106) reçoit les mêmes données depuis lesdits un ou plusieurs terminaux (102, 103, 104) via le premier réseau (101) à une fréquence correspondant à la redondance, le dispositif d'interconnexion de réseaux (105) étant **caractérisé en ce qu'**il acquiert la qualité de communication du second réseau (106) et donne instruction auxdits un ou plusieurs terminaux (102, 103, 104) de transmettre les données en accord avec la redondance déterminée en se basant sur la qualité de communication acquise et sur la priorité.

9. Dispositif d'interconnexion de réseaux selon la revendication 8,
dans lequel le dispositif d'interconnexion de réseaux (105) contient la combinaison d'une condition de la qualité de communication, de la priorité et d'un niveau de qualité ;
dans lequel le dispositif d'interconnexion de réseaux (105) extrait la combinaison de la priorité et du niveau de qualité en accord avec la condition acquise de la qualité de communication ;
dans lequel le dispositif d'interconnexion de réseaux (105) transmet la combinaison extraite de la priorité et du niveau de qualité auxdits un ou plusieurs terminaux (102, 103, 104) de manière à donner instruction auxdits un ou plusieurs terminaux (102, 103, 104) de sélectionner la redondance avec laquelle les données doivent être transmises ; et
dans lequel le dispositif d'interconnexion de réseaux (105) donne instruction auxdits un ou plusieurs terminaux (102, 103, 104) de transmettre les données en accord avec la redondance.

10. Dispositif d'interconnexion de réseaux selon la revendication 8, dans lequel le dispositif d'interconnexion de réseaux (105) contient la combinaison de la condition de qualité de communication, de la priorité et de la redondance ;
dans lequel le dispositif d'interconnexion de réseaux (105) extrait la combinaison de la priorité et de la redondance en accord avec la condition acquise de qualité de communication ;
dans lequel le dispositif d'interconnexion de réseaux (105) transmet la combinaison extraite de la priorité et de la redondance auxdits un ou plusieurs terminaux (102, 103, 104) de manière à donner instruction auxdits un ou plusieurs terminaux (102, 103, 104) de sélectionner une redondance avec laquelle les données doivent être transmises ; et
dans lequel le dispositif d'interconnexion de réseaux (105) donne instruction auxdits un ou plusieurs terminaux (102, 103, 104) de transmettre les données en accord avec la redondance.

11. Dispositif d'interconnexion de réseaux selon la revendication 9, dans lequel :
le dispositif d'interconnexion de réseaux (105) contient la redondance et un niveau de qualité correspondant à la redondance, il recueille une quantité de données générées par unité de temps à chaque priorité des données générées par observation par lesdits un ou plusieurs terminaux, il calcule une pluralité de taux de données à chaque priorité transmise par le second réseau (106) en multipliant les taux de données recueillies par unité de temps à chaque priorité et la redondance, il spécifie la combinaison de priorité et de redondance correspondant au taux de données susceptibles d'être transmises à la qualité de communication du second réseau (106) parmi la pluralité calculée de taux de données à chaque priorité transmise au second réseau (106), et il transmet la combinaison spécifiée de la priorité et de la redondance auxdits un ou plusieurs terminaux (102, 103, 104) ; et
dans lequel lesdits un ou plusieurs terminaux (102, 103, 104) sélectionnent une redondance correspondant à la priorité dans la combinaison spécifiée et mettent à jour une condition de la qualité de communication correspondant à la combinaison spécifiée de la priorité et de la redondance au taux de données susceptibles d'être transmises à la qualité de communication du second réseau (106).

12. Dispositif d'interconnexion de réseaux selon la revendication 8, dans lequel le dispositif d'interconnexion de réseaux (105) inclut :
une première unité de réseau Tx/Rx qui communique avec le premier réseau (101) ;
une unité de collecte d'état du premier réseau qui collecte un taux de données à chaque priorité des données transmises au premier réseau (101) ;
une seconde unité de réseau Tx/Rx qui communique avec le second réseau (106) ;
une unité d'acquisition de qualité de second réseau qui acquiert la qualité de communication du second réseau (106) ;
une pluralité de tables de redondance ayant les combinaisons de la priorité et de la redondance des données transmises depuis lesdits un ou plusieurs terminaux (102, 103, 104) ; et
une unité d'identification à méthode Tx/Rx qui extrait la combinaison de la priorité et de la redondance des données transmises depuis lesdits un ou plusieurs terminaux (102, 103, 104),
dans lequel l'unité d'identification à méthode Tx/Rx calcule un taux de données transmises au second réseau (106) en multipliant des taux de données à chaque priorité recueillie par l'unité de collecte d'état du premier réseau et la redondance correspondant à la redondance sélectionnée depuis la table de redondance et spécifie la combinaison de la priorité et de la redondance correspondant au taux de données susceptibles d'être transmises à la qualité de communication du second réseau (106) parmi la pluralité calculée de taux de données transmises au second réseau (106) depuis la table de redondance ; et
dans lequel la première unité de réseau Tx/Rx transmet la combinaison spécifiée de la priorité et de la redondance auxdits un ou plusieurs terminaux (102, 103, 104),

13. Procédé de transmission de données dans un système de réseaux incluant un ou plusieurs terminaux qui transmettent des données acquises à un premier réseau (101), un dispositif d'interconnexion de réseaux (105) qui est connecté auxdits un ou plusieurs terminaux (102, 103, 104) via le premier réseau (101) et qui reçoit les données depuis lesdits un ou plusieurs terminaux (102, 103, 104) et un serveur de gestion qui est connecté au dispositif d'interconnexion de réseaux (105) via un second réseau (106) et qui reçoit les données depuis le dispositif d'interconnexion de réseaux (105), les données contenant la priorité en accord avec le contenu des données,
le procédé comprenant :
la transmission par lesdits un ou plusieurs terminaux (102, 103, 104) des mêmes données au dispositif d'interconnexion de réseaux (105) via le premier réseau (101) à une fréquence correspondant à la redondance ; et
l'acquisition par le dispositif d'interconnexion de réseaux (105) de la qualité de communication du second réseau (106) ;
le procédé étant **caractérisé en ce qu'**il comprend en outre :
le dispositif d'interconnexion de réseaux (105) donne instruction auxdits un ou plusieurs terminaux (102, 103, 104) de transmettre les données en accord avec la redondance déterminée en se basant sur la qualité de communication acquise et sur la priorité.

14. Procédé de transmission de données selon la revendication 13,
dans lequel lesdits un ou plusieurs terminaux (102, 103, 104) contiennent la redondance et un niveau de qualité correspondant à la redondance ; et
le dispositif d'interconnexion de réseaux (105) contient la combinaison d'une condition de la qualité de communication, de la priorité et du niveau de qualité ;
le procédé comprenant :
l'extraction par le dispositif d'interconnexion de réseaux (105) de la combinaison de la priorité et du niveau de qualité en accord avec la condition acquise de qualité de communication ;
la transmission par le dispositif d'interconnexion de réseaux (105) de la combinaison extraite de la priorité et du niveau de qualité auxdits un ou plusieurs terminaux (102, 103, 104) ;
la sélection par lesdits un ou plusieurs terminaux (102, 103, 104) d'une redondance correspondant à la priorité en sélectionnant la redondance correspondant au niveau de qualité dans la combinaison transmise ; et
la transmission par lesdits un ou plusieurs terminaux (102, 103, 104) des données en accord avec la redondance sélectionnée.

15. Procédé de transmission de données selon la revendication 13,
dans lequel le dispositif d'interconnexion de réseaux (105) contient la combinaison d'une condition de la qualité de communication, de la priorité et de la redondance,
le procédé comprenant :
l'extraction par le dispositif d'interconnexion de réseaux (105) de la combinaison de la priorité et de la redondance en accord avec la condition acquise de qualité de communication ;
la transmission par le dispositif d'interconnexion de réseaux (105) de la combinaison extraite de la priorité et de la redondance vers lesdits un ou plusieurs terminaux (102, 103, 104) ;
la sélection par lesdits un ou plusieurs terminaux (102, 103, 104) d'une redondance correspondant à la priorité dans la combinaison transmise ; et
la transmission par lesdits un ou plusieurs terminaux (102, 103, 104) des données en accord avec la redondance sélectionnée.
